# EUROPEAN PATENT APPLICATION

(11) **EP 3 598 098 A1**
(43) Date of publication of application: **22.01.2020**
(21) Application number: 18382545.4
(22) Date of filing: 20.07.2018
(51) Int. Cl.: G01M 3/18, B64D 13/00

(54) **SYSTEM FOR LEAKAGE DETECTION**

(71) Applicant: Airbus Defence and Space, S.A.U., 28906 Getafe - Madrid (ES)
(72) Inventor: FEITO CABRERO, Andrés, E-28906 Getafe-Madrid (ES)
(74) Representative: ABG Intellectual Property Law, S.L.

(57) **Abstract**

The present invention provides a system for detection of leakage on at least a portion of a duct, wherein the system comprises: a blanket leaving an interstice with the duct, securing means, sensing means adapted to detect a leakage on such portion of the duct by a pressure increase produced in the interstice, and an electrical circuit with a default electrical continuity. Particularly, a movable part of the sensing means is configured to be displaced from the blanket as the pressure in the interstice increases, in such a way that such displacement modifies the electrical continuity of the electrical circuit allowing the detection of the leakage on the portion of the duct.

## Description

### TECHNICAL FIELD OF THE INVENTION

The present invention belongs to the field of air systems, and particularly, it belongs to the field of detecting air leakages within the engine bleed air system of an aircraft.

In particular, the invention provides a system, an assembly, and a method for bleed air leakage detection in duct junctions or through the ducts themselves, in order to prevent hazards to the aircraft safe flight, such as structural issues and fuel ignition risks.

### BACKGROUND OF THE INVENTION

In gas turbine engines, air is normally taken from the compressor stage upstream of the fuel-burning chamber(s). Thus, this bleed air is at high temperature and high pressure, wherein typical values are comprised in the range 200-500°C when extracted from the engine, and in the range 200-250°C after regulation in a precooler; and 275 kPa, respectively. Once taken, this bleed air is channeled from said compressor stages of the engine to various locations within the aircraft, by a network of ducts, valves and regulators. Consequently, such channeling means are to be adapted to withstand the high temperature and pressure of the bleed air.

Under some circumstances, such channeling means may undergo an unexpected loss of bleed air, the *so-called* leakages, which could potentially lead to problems when operating the aircraft. Due to its inherent effect in the overall performance, planning ahead and detection means installed beforehand throughout the channeling means are normally envisaged.

It is known in the art of bleed air leakage detection to utilize overheat detection sensors, such as the eutectic salt based sensors which are widespread used in the industry.

Briefly, such conventional overheat detection sensors are commonly formed by electrical detectors which have two conductors separated by filler, wherein the overall resistance changes insofar a high temperature condition exists at some point along the length of the sensor. In particular, the overheat detection sensors based on eutectic salts are coaxial wires with a metallic core, an external metallic layer and a eutectic salt in between. Such intermediate eutectic salt decreases its impedance when the temperature rises.

To allow leakage detection, the channels intended to be sensed are normally airtightly coated at the ends by cover insulation with an intermediate hole which directs the leaked air towards a hot spot in which the sensing elements are flexibly placed, i.e. allowing relative displacement. To address the route of the whole channeling means, the same architecture is repeated along the channeling means connecting a sequence of overheat detection sensors in series.

This conventional architecture is extremely susceptible to the loop wire installation, where the loops need to be located very precisely aligned with the hot spot trying to avoid small bending radius. The installation of this conventional architecture based on flexible wires draws special attention to the detailed geometry routing through the aircraft which makes evident the lack of robustness in the detection accuracy, and thus being very sensitive to manufacturing human errors.

In addition, the variation in the impedance of eutectic salts may be subject to changes in ambient temperature, degradation of the salts within a detector over time, or a general shifting of the characteristics of the wire installation. As a consequence, erroneous spuriously detections triggered by high temperatures produced by sources other than leakages may occur.

### SUMMARY OF THE INVENTION

The present invention provides a solution for the aforementioned problems, by a system for leakage detection according to claim 1, an assembly according to claim 10, a method for detecting leakage according to claim 11, and an aircraft according to claim 15. In dependent claims, preferred embodiments of the invention are defined.

In a first inventive aspect, the invention provides a system for detection of leakage on at least a portion of a duct, the system comprising:
- a blanket adapted to cover said portion of a duct, wherein an inner face of the blanket is configured to face the portion of the duct, such inner face being spaced from the portion of the duct forming an interstice therebetween, and means adapted to airtightly attach the periphery of blanket to at least a portion of a duct,
- at least one sensing means adapted to detect a leakage on such portion of the duct, the leakage producing a pressure increase in the interstice, and
- an electrical circuit with a default electrical continuity,
wherein the system is characterized in that:
- the sensing means comprises a movable part in fluid communication with the interstice between the portion of the duct and the inner face of the blanket, and
- the movable part of the sensing means is configured to be displaced from the blanket as the pressure in the interstice increases, wherein such displacement modify the electrical continuity of the electrical circuit allowing the detection of the leakage on the portion of the duct.

Throughout this entire document, "at least a portion of a duct" will be understood as a bodily tube or vessel for carrying fluids, preferably gases, of the type of a pipe, tube, or channel. Preferably, bleed air from an aircraft engine is conveyed. Said at least a portion of a duct may be either the duct itself wherein a leakage is produced, or a duct junction where two different ducts are coupled.

In case such at least a portion of a duct develops a crack, the bleed air leaks from the duct interior to the outside. In this sense, the leakage on at least a portion of a duct produces the bleed air to escape through an opening usually by a fault or mistake. Because the bleed air leaked is normally undetected and prejudicial to other equipment within the aircraft, the ducts are normally insulated to prevent damage to the aircraft.

According to the invention, a blanket is adapted to wrap around the exterior of at least a portion of the duct. The blanket comprises an inner face configured to face the exterior portion of the duct leaving an interstice therebetween.

Existing blankets within the state of the art may comprise one or both soft and hard cover insulations to wrap the at least a portion of the duct. Therefore, the person skilled in the art should recognize that, apart from providing the ducts with the soft insulation for thermal conductivity reasons in normal operation conditions, said ducts may also be provided with hard cover insulation to prevent damage to the aircraft in case of rupture thereof. In particular, this hard cover insulation normally contains, concentrates, and redirects the leak flow towards the sensing elements.

As it was already mentioned, the blanket according to the present invention is adapted to wrap around the exterior of either at least a portion of a duct itself wherein a leakage is produced, or a duct junction where two different ducts are coupled.

It is to be noted that, in case of duct junction, the blanket to be used should be more flexible in order to absorb possible relative movements; while duct themselves are normally covered by the mentioned hard cover insulation which acts as the blanket within this invention.

The blanket comprises a periphery, which may be understood as its external boundary intended to be airtightly attached to the at least a portion of a duct by according means.

It is to be noted that the duct may comprise a diameter too big so as to allow to be entirely wrapped by the blanket, and therefore only an area of the duct is to be wrapped by the blanket. In this later case, the blanket, instead of being substantially tubular, shall be a curved plane shaping the area of the duct to be wrapped.

Consequently, the means to airtightly attach the periphery of the blanket to at least a portion of a duct may be positioned either close to the border in the curved plane blanket or as a ring-shaped means at both ends of the substantially tubular blanket. Additionally, such means are configured to securely attach the blanket to the at least a portion of the duct.

A person skilled in the art would recognize that in case the at least a portion of the duct is a single duct; the blanket is understood as equivalent to the hard cover insulation extensively used in the state of the art.

Thus, in the presence of leakage on the at least a portion of the duct, the interstice acts as a leaked fluid reservoir which increases the pressure therein as more fluid is leaked. Provided that the movable part of such sensing means is in fluid communication with the interstice to be displaced according to the pressure difference therein, the system is able to detect the leakage irrespective of the placement of the sensing means or possible relative movement caused, for example, by vibrations.

Further, the at least one sensing means of the system is connected within the electrical circuit thus defining a default electrical continuity. Preferably, such default electrical continuity is defined once the at least one sensing means is installed and there is no leakage on the ducts. Provided that more than one sensing means are installed throughout the duct network, all the sensing means are connected sequentially in series within the same electrical circuit.

Advantageously, the system according to the invention is insensitive to the wiring installation contrary to the conventional overheat detection sensors. Moreover, contrary to the requisite in the prior art of alignment between the overheat detection sensors and the hot spot; the position of the wires relative to the sensing means is not relevant.

In this sense, since the wires used within the electrical circuit of the system are solely intended to establish an electrical continuity, the wires of the invention are cheaper and simpler in comparison with the prior art.

Also, the present system based on pressure differential is quicker to react and detect leakages accordingly, as an improvement over the conventional overheat detection sensors described in the state of the art, in which the detection was subject to thermal inertia which stretched the reaction time of the sensor. Thus, erroneous lectures of leakages produced by sources of high temperature other than leakages are avoided.

Preferably, the pressure increasing within the interstice is related to a leak mass flow escaping from the duct, i.e. the mass of leaked fluid which passes through the leakage opening per unit of time. Nevertheless, the person skilled in the art may consider other fluidic variables as of interest to determine a correspondence and allowing the evaluation of the leakage.

In a particular embodiment, the at least one sensing means further comprises:
- the movable part,
- a rigid part arranged on an outer face of the blanket opposite to the inner face, said rigid part configured to house the movable part inside and allowing said movable part to move therein, and
- a biasing element configured to bias the movable part towards the outer face of the blanket as a rest position,
wherein the movable part in fluid communication with the interstice is configured to move upon the pressure increase therein, and wherein the biasing means are configured to allow the movable part to move away from the outer face of the blanket under the action of the pressure in the interstice when exceeding a pre-established pressure limit.

The rigid part of the sensing means is intended to be securely installed over such outer face of the blanket. Preferably, the rigid part is a chamber-shaped part housing the movable part therein, and comprising an opening shared with the blanket through which the movable part is in fluid communication with the interstice.

Advantageously, as the blanket and the rigid part are securely installed allowing the fluid communication, the present system is insensitive to relative movements of the blanket or wires. This is a further advantage over the conventional overheat detection sensors which relied their accuracy of the detection to their alignment with the hot spot, severely affected to potential movement of the blanket due to installation issues, vibrations or maintenance handling.

Furthermore, the adjustment of the biasing means to only allow the movable part to move away upon the pressure in the interstice surpasses a pre-established pressure limit, allows disregarding erroneous detections produced by small residual leakages in the interstice.

In a particular embodiment, the electrical circuit comprises wiring connection configured to be connected to the rigid part, and the movable part provides an electrical conductivity through it, the electrical continuity of the electrical circuit being modify in such a way:
- when the movable part rests closest to the outer face of the blanket by means of the biasing element, the electrical circuit is closed, and
- when the movable part is moved away from outer face of the blanket forced by the pressure increasing in the interstice, the electrical circuit opens and electrical continuity is interrupted.

It is to be noted that in case that more than one sensing means are considered in the system, the wiring connection connects in series each rigid part in order to form the electrical circuit, preferably in a loop configuration. Then, the respective movable parts are configured to interrupt (i.e. open) the electrical continuity by switching its status upon a leakage is detected.

Preferably, both the rigid part and the movable part are made of a conductive material, more preferably metal.

In a particular embodiment, the electrical circuit further comprises an electrical continuity detector connected with the wiring connection between the sensing means and a remote warning device, the electrical continuity detector being configured to send a signal to the remote warning device, which allows alerting of the detected leakage.

The electrical continuity detector is configured to check the electrical continuity of the electrical circuit. In a preferred embodiment, the electrical continuity detector is configured to check the electrical continuity as a Boolean discretization (such as True/False value). Upon detection of a leakage, the electrical continuity detector is configured to alert of the same to the remote warning device by conventional means. Optionally, the electrical circuit further comprises various electrical continuity detectors, each for a portion of the electrical circuit.

Advantageously, the electrical continuity detector connected within the electrical circuit is easier and simpler to use, compared with the ones required in the state of the art which measured the impedance between the two conductors (that is, the impedance of the filler). This measurement of the impedance as described in the state of the art was quite complex, as additional equipment such as signal filters and alternate current (AC) needed to be used not to degrade filler characteristics. In the system according to the invention, that additional equipment is avoided.

In a particular embodiment, the rigid part of the sensing means comprises at least two electrically insulated sections, each section connected to an end of the wiring connection of the electrical circuit, preferably the electrical insulated sections being joined airtightly.

In a particular embodiment, the rigid part of the sensing means comprises an even number of electrical insulated sections, each pair of electrical insulated sections being at different heights from the outer face of the blanket.

Accordingly, a single rigid part is sectioned in levels of different heights, each level at different height being in turn sectioned in two electrically insulated halves. Each halve of a particular height is connected to an end of the wiring connection of the electrical circuit for allowing leakage detection depending on differential pressure of the interstice.

Therefore, the electrical continuity of the electrical circuit is modified in such a way that when the movable part passes by the electrical insulated sections at a particular height, the electrical circuit is closed at such particular height. As the movable part moves away in height (forced by the pressure increasing in the interstice), the electrical circuit opens at such particular height.

Provided that the pressure continues increasing in the interstice, the movable part continues moving away, leaving at a point such height behind. Accordingly, the movable part shall reach the next pair of electrical insulated sections at a higher height for closing therefore such particular electrical circuit.

Hence, the detection of different severities of leakage can be detected. The different severities of leakage are related to different leak mass flows escaping from the duct.

For example, if the rigid part is a chamber-shaped part housing the movable part therein, the sectioning of the same in levels of different heights provides a set of annulus or ring-shaped parts.

In a particular embodiment, the blanket covering the portion of a duct further comprises at least one calibrated through hole configured to vent the fluid leakage from the interstice.

Therefore, the blanket allows releasing potential leaked bleed air through the calibrated hole for avoiding its accumulation within the interstice, at a point that jeopardizes the integrity of the system. This through hole need to be calibrated in order to determine correspondence between the pressure increasing in the interstice with the leak mass flow escaping from the duct.

In a particular embodiment, the sensing means are arranged on the blanket separated from the calibrated through hole.

In a particular embodiment, the system for leakage detection is adapted to be mounted on an aircraft, the at least a portion of a duct forming part of the aircraft bleed air system.

In a particular embodiment, each pair of electrical insulated sections at different heights from the outer face of the blanket corresponds to different operational conditions of the aircraft, being the lowest height according to on-ground operational conditions and any of the upper heights according to operational conditions at higher altitudes.

Advantageously, this embodiment takes into consideration how the ambient conditions throughout different operational conditions of the aircraft affect the accuracy of the present system. In other words, it is known that the static pressure and density of the air is smaller at high altitudes, and therefore, for a given leak mass flow rate, the differential pressure between the interstice and the exterior of the blanket becomes higher as long as the operational altitude increases (i.e. density decreases).

That is, for a given leak mass flow, the abovementioned effect provokes that the force of the pressure in the interstice over the movable part is higher at higher altitudes than at lower altitudes.

In a second inventive aspect, the invention provides an assembly comprising:
- at least a portion of a duct for the channeling of fluids, preferably gases, and
- a system according to any of the embodiments of the first inventive aspect.

In a third inventive aspect, the invention provides a method for detecting leakage in a portion of a duct, the method comprising the steps of:
a. providing a system according to any of the embodiments of the first inventive aspect and at least a portion of a duct, or an assembly according to the second inventive aspect,
b. covering at least a portion of the duct with a blanket leaving an interstice between them,
c. installing at least one sensing means with a movable part in fluid communication with such interstice establishing a default electrical continuity of an electrical circuit, such that, upon a leakage on the portion of the duct takes place, the pressure in the interstice increases, and the movable part of the sensing means is configured to be displaced away from the blanket, and
d. detecting such leakage by a modification of the electrical continuity of the electrical circuit.

In a particular embodiment, the method further comprises in step c): the movable part of the sensing means being configured to be displaced away from the blanket once the pressure in the interstice exceeds a pre-established pressure limit.

In a particular embodiment, the sensing means installed in step c) further comprises a rigid part in turn comprising an even number of electrically insulated sections, wherein each section is connected to an end of a wiring connection of the electrical circuit, and each pair of electrical insulated sections are at different heights from the outer face of the blanket,
in such a way that each pair of electrical insulated sections at different heights from the outer face of the blanket corresponds to different operational conditions of an aircraft, being the lowest height according to on-ground operational conditions and any of the upper heights according to operational conditions at higher altitudes.

In a particular embodiment, the upper heights among the different heights of each pair of electrical insulated sections are configured so that the higher the altitude in the operational condition of the aircraft, the higher the height of the pair of electrical insulated sections from the outer face of the blanket.

In a fourth inventive aspect, the invention provides an aircraft comprising the system for leakage detection according to any of the embodiments of the first inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1a-1b: These figures show an exemplary embodiment of the system for detection of leakage on at least a portion of a duct according to the invention, and an assembly, respectively.
- Figure 2: This figure shows an exemplary embodiment of two sensing means with different configuration and connected in series, where the electrical continuity is by default and modified, respectively.
- Figure 3: This figure shows a top view of the sensing means shown in Figure 2 connected in series.
- Figure 4: This figure shows an exemplary embodiment of an electrical circuit in a closed loop configuration comprising various sensing elements.
- Figure 5: This figure shows an exemplary embodiment of a sensing means configured to take into account the effect of altitude in air density and static pressure.
- Figure 6: This figure shows a top view of two sensing means like the one shown in Figure 5 connected in series.
- Figure 7: This figure shows a chart which provides correlation between leak mass flow rate and the displacement of the movable part at different operational altitude conditions.
- Figure 8: This figure shows an aircraft comprising a system for leakage detection.

### DETAILED DESCRIPTION OF THE INVENTION

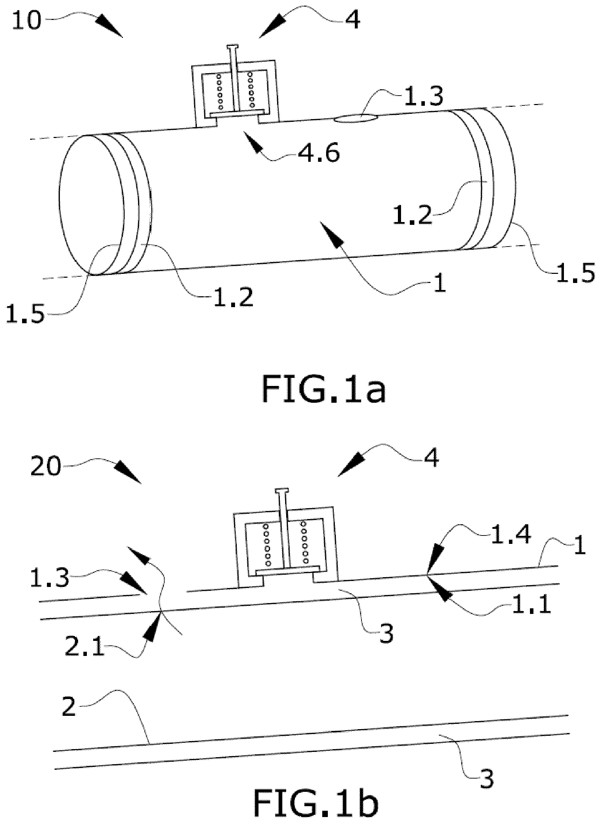

Figure 1a shows an exemplary embodiment of the system (10) for detection of leakage (2.1) on at least a portion of a duct (2) according to the present invention. In particular, the system (10) shown in figure 1a is adapted to be mounted on a portion of a bleed air duct (2) to which a blanket (1) of the system (10) is airtightly attached. Therefore, Figure 1b shows an assembly (20) of the system (10) of Figure 1a mounted or installed on at least a portion of a duct (2); particularly, it is depicted a cross sectional view thereof.

As it can be observed, the blanket (1) is substantially tubular and the means (1.2) used to airtightly attach its periphery (1.5) is a pair of flanges (1.2) or ring-shaped means (1.2) at both ends of the substantially tubular blanket (1).

Such flanges (1.2) attached to the periphery (1.5) of said blanket (1) airtightly seals the space between the inner face (1.1) of the blanket (1) and the portion of the bleed air duct (2) along such periphery (1.5) (i.e. at its both ends). This prevents the air within the interstice (3) from escaping out of the blanket (1) along the periphery (1.5).

Although the blanket (1) shown throughout this section is substantially tubular thus entirely wrapping the portion of the duct (2), others shapes can be envisaged depending on the dimensions of the ducts (2).

Accordingly, although this figure shows that the at least a portion of the duct (2) is a duct junction (2) (*not shown in this figure*), single ducts can be also be considered throughout this section. Therefore, the blanket shown in figure 1a is more flexible in order to absorb possible relative movements.

On the contrary, in the event single ducts were considered, the blanket (1) would be the hard cover insulation extensively used in the state of the art.

Therefore, if any leakage (2.1) occurs in the portion of the bleed air duct (2) covered by the blanket (1), the leaked air will accumulate in the interstice (3) between the duct (2) and the inner face (1.1) of the blanket (1), thus increasing the pressure therein. The blanket (1) further comprises a calibrated through hole (1.3). Said leaked air will be released through said calibrated through hole (1.3) to avoid reaching a certain level of pressure that could put in risk to the integrity of the system (10).

Further, the system (10) comprises a sensing means (4) adapted to detect a leakage (2.1) on such portion of the bleed air duct (2), airtightly installed to the outer surface (1.4) of the blanket (1). Said sensing means (4) is a valve-type formed by a movable part (4.1), a rigid part (4.2) and a biasing means (4.3).

The rigid part (4.2) is chamber-shaped which houses the movable part (4.1), being identified with a piston (4.1). The rigid part (4.2) also houses the biasing means (4.3) (*e.g.* a spring) which tends to force the piston (4.1) to move towards the blanket (2), this is, to seal the opening (4.6) which stablishes fluid communication between the interstice (3) and the sensing means (4).

In the event of an air leakage (2.1) in the portion of the bleed air duct (2) covered by the blanket (1), if mass flow rate exceeds a predetermined threshold, the leaked air (2.1) accumulated in the interstice (3) reaches a certain differential pressure between the internal part of the system (10) for leakage detection and the outer part. In other words, the differential pressure should be understood as the difference between the pressure on the inner face (1,1) of the blanket (1) (i.e. the one which faces the duct (2)) and the pressure on the opposite face (1.4) (i.e. equal to ambient condition, this is, the outer face). Therefore, this differential pressure increases as the pressure in the interstice (3) increases insofar the ambient conditions does not change.

Then, when such differential pressure reaches a pre-established value, the force exerted by the accumulated leak air against the movable part (4.1) will be sufficient to compensate the biasing means (4.3) force and, thus, the movable part (4.1) will start moving away from the outer face (1.4) of the blanket (1).

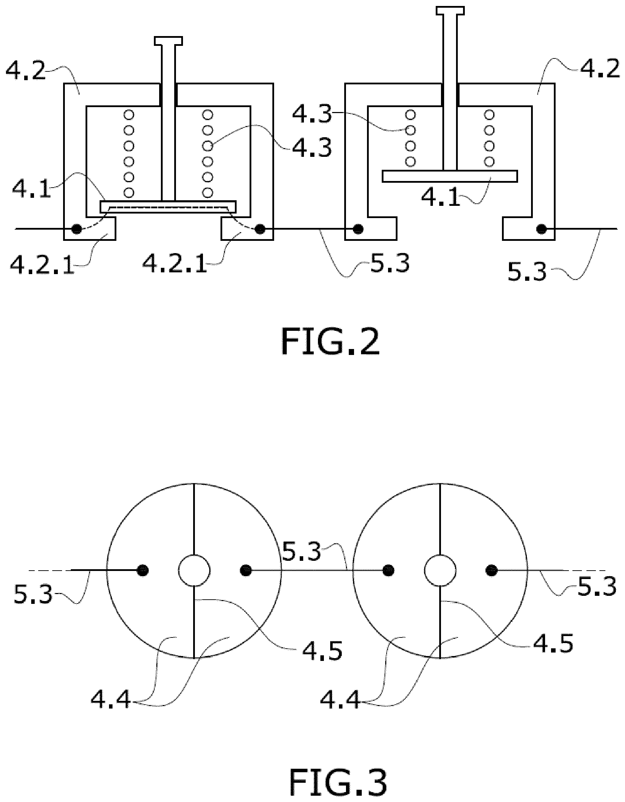

Figure 2 shows two sensing means (4) connected in series to each other. Each sensing means (4) is at a different state corresponding to different positions of the movable part (4.1) (i.e. the piston). Hence, as a consequence of such different configuration, the electrical continuity of each sensing means (4) is different.

Between both sensing means (4), wiring connection (5.3) connects them in series, forming part of an electrical circuit (5). Particularly, respective rigid parts (4.2) are connected by the wiring connection (5.3). Once the sensing means (4) are installed, a default electrical continuity is defined provided that no leakage (2.1) on the ducts (2) is declared.

In this particular example, both the rigid parts (4.2) and the movable parts (4.1) are made of a metallic material, thus providing electrical conductivity through it. However, the rigid parts (4.2) are sectioned on at least two electrical insulated sections (4.4), each section (4.4) connected to an end of the wiring connection (5.3). Therefore, electrical continuity through the sensing means (4) is established only by physical touching of the movable part (4.1) with the two electrical insulated sections (4.4) at the same time.

Particularly, both rigid parts (4.2) comprise a cross-sectional interface (4.5) made of an insulating element (as can be shown in Figure 3) which divides the rigid part (4.2) in two electrical insulated halves, each one connected to a different wiring connection (5.3), thus providing physical continuity to the movable part (4.1), but cutting off electrical continuity through it. Thus, an undesired state of providing default electrical continuity when the movable part (4.1) is not in physical contact with the rigid part (4.2) is prevented.

It is to be noted that, in order to facilitate the physical touching of the movable part (4.1) with the two electrical insulated sections (4.4) at the same time, the closest part to the blanket (1) of the rigid part (4.2) comprises metallic tabs (4.2.1) protruding inwards to ease the default electrical continuity if no leakage (2.1) is declared.

The sensing means (4) shown on the left part of figure 2 comprises a movable part (4.1) resting against the lower part of the sensing means (4), position which corresponds to a state in which no leakage (2.1) can be declared. It is to be noted that the movable part (4.1) physically touches the two electrical insulated sections (4.4) of the rigid part (4.2) at the same time.

On the other hand, the movable part (4.1) of the sensing means (4) shown on the right part has been moved away from the blanket (1) by action of the leaked air, position which corresponds to a state in which a leakage (2.1) can be declared. It is to be noted that the movable part (4.1) is physically separated from the two electrical insulated sections (4.4) of the rigid part (4.2).

In the event of those wiring connections (5.3) being part of an electrical circuit (5) with a default electrical continuity upon installation:
- in the state corresponding to the sensing means (4) on the left, said electrical continuity would not be altered as there is a physical contact between the movable part (4.1) and the sections (4.4) of the rigid part (4.2) thus allowing the electrical continuity; and
- in the state corresponding to the sensing means (4) on the right, said electrical continuity is altered as there is no such a physical contact.

Particularly, in this later configuration said electrical continuity will be interrupted because of the displacement of the metallic movable part (4.1) away from the metallic body of the sensing means (4).

Figure 3 shows a top view of the two sensing means (4) shown in Figure 2. As it can be observed, each sensing means (4) comprises a cross sectional interface (4.5) made of an insulating material which divides each sensing means (4) in two halves while providing said halves with electrical insulation. Insulating materials such as any kind of polymer, e.g. PEEK, can be used.

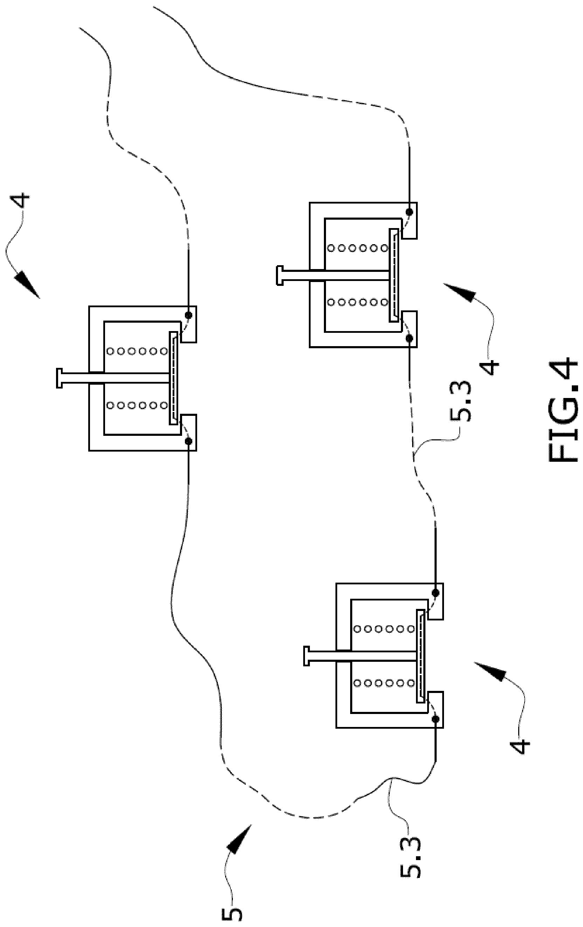

Figure 4 shows an exemplary embodiment of an electrical circuit (5) in a closed loop configuration with various sensing means (4). The electrical circuit (5) further comprises an electrical continuity detector (5.1) (not shown) connected by wiring connections (5.3) between the sensing means (4) and a remote warning device (5.2) (not shown). Such electrical continuity detector (5.1) is configured to send a signal to such remote warning device (5.2) in case any of the sensing means (4) detects a leakage (2.1).

Each of the sensing means (4) shown is according to those shown in figures 2 or 3. It is to be noted that such sensing means (4) can be arranged either
- on the same blanket (1) at a different points, or
- on different blankets (1).

When any of the movable parts (4.1) of the sensing means (4) is displaced by the action of the air proceeding from a leakage (2.1), the electrical continuity of its corresponding sensing means (4) will be modified as a result. Consequently, the default electrical continuity shall be further modified in the whole electrical circuit (5) because the connection in series of the sensing means (4). As a result, the electrical continuity detector (5.1) (e.g. an electronic component) detects a modification (e.g. interruption) of the electrical continuity from the one as default, and sends a signal to the remote warning device (5.2) which declares the same.

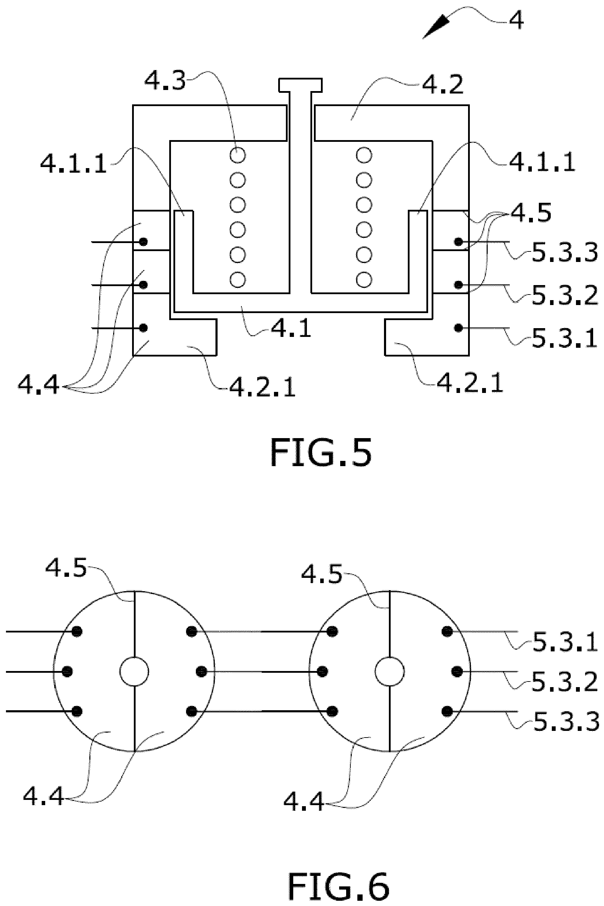

Figure 5 shows a sensing means (4) further comprising an even number of electrical insulated sections (4.4), each pair of electrical insulated sections (4.4) being at different heights from the outer face (1.4) of the blanket (1). In this particular example, the rigid part (4.2) is divided by the middle into two electrical insulated sections (4.4). Further, each of those halves is divided into 3 electrical insulated sections (4.4) at three different heights. Therefore, the even number of 6 electrical insulated sections (4.4) is achieved as a result, each pair at a different height.

Similarly as those shown in figures 1 to 4, both the rigid part (4.2) and the movable part (4.1) are metallic. Also, between each pair of electrical insulated sections (4.4), a transverse cross-sectional interface (4.5) made of an insulating material is arranged. Accordingly, each pair of electrical insulated sections (4.4) is connected to a different pair of wiring connections (5.3) being part of a different closed loop of the electrical circuit (5).

Nevertheless, other number of sections (4.4) can be considered depending on the variation of the operational ambient conditions. It is to be noted that this particular embodiment is of special application in bleed air systems mounted in aircrafts (6), and thus, the number of sections (4.4) shall be accorded to the operational environmental envelope of the aircraft (6).

As it is well known by those skilled in the art, air density and static pressure are smaller at higher altitudes, and so, the differential pressure, for a given leak mass flow rate, is higher as the operational altitude increases. Consequently, whereas a leakage (2.1) that is below a predetermined value is not able to displace the movable part (4.1) at sea level; it could displace it at higher altitudes, for example, 20000 feet.

As it will be clarified with an example below, the sensing means (4) body is configured to take into account the effect of operational altitude conditions in air density and static pressure when installed on an aircraft (6).

Further, the movable part (4.1) comprises extensions (4.1.1) protruding from its edge, these extensions (4.4.1) allowing the movable part (4.1) to be in physical contact with more than one pair of electrical insulated sections (4.4). In this particular example, the extensions (4.4.1) have a length suitable for being in physical contact with the three pair of electrical insulated sections (4.4.1, 4.4.2, 4.4.3) when no leakage (2.1) is declared.

Therefore, as each pair of electrical insulated sections (4.4) is connected to a different pair of wiring connections (5.3) (i.e. in a different closed loop of the electrical circuit), the modification of the electrical circuit (5) in each closed loop can be discretized. To do so, different electrical continuity detectors (5.1) may be envisaged.

The diagnosis of whether a leakage (2.1) has occurred will be based in the state of electrical continuity among the different loops of the electrical circuit (5) and also keeping into consideration the operational altitude conditions.

For exemplary purposes, three closed loops (e.g. loop 1 (4.4.1), loop 2 (4.4.2), and loop 3 (4.4.3)) are considered:
- At sea level (i.e. 0 feet), in case the loop 1 dos not provide continuity, then a leakage (2.1) is declared. This is caused as the electrical continuity is altered as there is no physical contact between the movable part (2.1) and the lowest pair of electrical insulated sections (4.4.1) of the rigid part (4.2) thus preventing the electrical continuity in loop 1.
- At a higher altitude, in case the loop 1 does not provide continuity the leakage (2.1) is not declared yet, and it is only declared when the loop 2 does not provide electrical continuity.
- And, respectively, for even higher altitudes other loops will be monitored.

In short, the electrical continuity of the loop is modified in such a way that when the movable part (4.1) passes by the electrical insulated sections (4.4) at a particular height, the electrical circuit (5) (this is, the loop of such height) is closed at such particular height. As the movable part (4.1) moves away in height (forced by either the pressure increasing in the interstice (3), or the differential pressure increasing as the altitude also increases), the electrical circuit (5) opens at such particular height.

As the pressure increasing in the interstice (3) forces the biasing means (4.3) (e.g. a spring) to move away from the blanket (1), the biasing means (4.3) is sequent compressed (and stores mechanical energy). Thus, its opposing force (being approximately proportional to its shortening in length) increases in height, and the change of differential pressure according to the altitude can be controlled because the opposing force at such loop height is bigger.

Thus, the biasing means (4.3) is adjusted to only allow the movable part (4.1) to move away upon the pressure in the interstice (4) surpasses a pre-established pressure limit for each operational altitude condition.

It is to be noted that each of the operational altitudes used in this example can be easily related to an ambient condition pressure in order to establish the differential pressure which triggers the displacement of the movable part (4.1).

Figure 6 shows a top view of two sensing means (4) according to that shown in Figure 5. Like in Figure 2, it is possible to see the cross-sectional interfaces (4.5) that split the three pairs of electrical insulate sections (4.4.1, 4.4.2, 4.4.3) in half, leaving only one wiring connection (5.3) connected to a single half of every pair of electrical insulate sections (4.4). This prevents electrical continuity between wiring connections (5.3) of different loops by other means than through the metallic movable part (4.1).

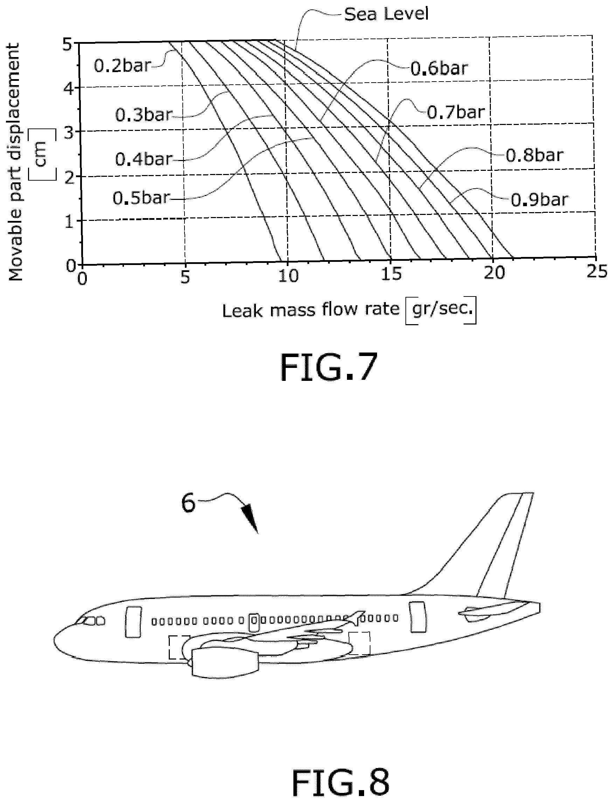

As it was already stated, the pressure increasing within the interstice (3) may be related to different fluidic variables, such as leak mass flow escaping from the duct (2). Figure 7 shows a chart which provides correlation between leak mass flow rate -in *grams per second* (shown in x-axis)- versus movable part (4.1) displacement -in *cm.* (shown in y-axis)- at different altitude operational conditions for a given (calibrated) through hole diameter, elastic constant (K) and preload (biasing) of the spring and volume of the interstice. Each altitude operational condition being represented by a different curve, such that the farther from the origin, the lower operational conditions.

A person skilled in the art should recognize that the maximum displacement of the movable part (4.1) is 5cm. In this sense, it is started as a rest position of 5cm, and as the leak mass flow rate increases, is becomes less displaced up to reach 0cm.

In this sense, the 5cm. mark corresponds to the closest end of the sensing means to the blanket; whilst 0cm. mark corresponds to opposite end of the sensing means (i.e. the farthest end relative to the blanket).

Figure 8 depicts an aircraft (6) comprising a system (10) for leakage detection as shown in any of the previous figures. In particular, the system (10) for leakage detection is adapted to be mounted on the aircraft, and the at least a portion of a duct forms part of the aircraft bleed air system. Therefore, the aircraft (6) also comprises an assembly (20).

## Claims

1. A system (10) for detection of leakage (2.1) on at least a portion of a duct (2), the system comprising:
• a blanket (1) adapted to cover said portion of a duct (2), wherein an inner face (1.1) of the blanket (1) is configured to face the portion of the duct (2), such inner face (1.1) being spaced from the portion of the duct (2) forming an interstice (3) therebetween, and means (1.2) adapted to airtightly attach the periphery (1.5) of blanket (1) to at least a portion of a duct (2),
• at least one sensing means (4) adapted to detect a leakage (2.1) on such portion of the duct (2), the leakage (2.1) producing a pressure increase in the interstice (3), and
• an electrical circuit (5) with a default electrical continuity,
wherein the system (10) is **characterized in that**:
• the sensing means (4) comprises a movable part (4.1) in fluid communication with the interstice (3) between the portion of the duct (2) and the inner face (1.1) of the blanket (1), and
• the movable part (4.1) of the sensing means (4) is configured to be displaced from the blanket (1) as the pressure in the interstice (3) increases, wherein such displacement modify the electrical continuity of the electrical circuit (5) allowing the detection of the leakage (2.1) on the portion of the duct (2).

2. The system (10) according to claim 1, wherein the at least one sensing means (4) further comprises:
• the movable part (4.1),
• a rigid part (4.2) arranged on an outer face (1.4) of the blanket (1) opposite to the inner face (1.1), said rigid part (4.2) configured to house the movable part (4.1) inside and allowing said movable part (4.1) to move therein, and
• a biasing element (4.3) configured to bias the movable part (4.1) towards the outer face (1.4) of the blanket (1) as a rest position,
wherein the movable part (4.1) in fluid communication with the interstice (3) is configured to move upon the pressure increase therein, and wherein the biasing means (4.3) are configured to allow the movable part (4.1) to move away from the outer face (1.4) of the blanket (1) under the action of the pressure in the interstice (3) when exceeding a pre-established pressure limit.

3. The system (10) according to any of claims 1 or 2, wherein the electrical circuit (5) comprises wiring connection (5.3) configured to be connected to the rigid part (4.2), and the movable part (4.1) provides an electrical conductivity through it, the electrical continuity of the electrical circuit (5) being modified in such a way:
• when the movable part (4.1) rests closest to the outer face (1.4) of the blanket (1) by means of the biasing element (4.3), the electrical circuit (5) is closed, and
• when the movable part (4.1) is moved away from outer face (1.4) of the blanket (1) forced by the pressure increasing in the interstice (3), the electrical circuit (5) opens and electrical continuity is interrupted.

4. The system (10) according to claim 3, wherein the electrical circuit (5) further comprises an electrical continuity detector (5.1) connected with the wiring connection (5.3) between the sensing means (4) and a remote warning device (5.2), the electrical continuity detector (5.1) being configured to send a signal to the remote warning device (5.2), which allows alerting of the detected leakage (2.1).

5. The system (10) according to any of claims 2 to 4, wherein the rigid part (4.2) of the sensing means (4) comprises at least two electrical insulated sections (4.4), each section (4.4) connected to an end of the wiring connection (5.3) of the electrical circuit (5), preferably the electrical insulated sections (4.4) being joined airtightly.

6. The system (10) according to claim 5, wherein the rigid part (4.2) of the sensing means (4) comprises an even number of electrical insulated sections (4.4), each pair of electrical insulated sections (4.4) being at different heights from the outer face (1.4) of the blanket (1).

7. The system (10) according to any of claims 1 to 6, wherein the blanket (1) covering the portion of a duct (2) further comprises at least one calibrated through hole (1.3) configured to vent the fluid leakage (2.1) from the interstice (3), and wherein the sensing means (4) are arranged on the blanket (1) separated from the calibrated through hole (1.3).

8. The system (10) according to any of claims 1 to 7, wherein the system (10) for leakage detection is adapted to be mounted on an aircraft (6), the at least a portion of a duct (2) forming part of the aircraft bleed air system.

9. The system (10) according to claims 6 and 8, wherein each pair of electrical insulated sections (4.4) at different heights from the outer face (1.4) of the blanket (1) corresponds to different operational conditions of the aircraft (6), being the lowest height according to on-ground operational conditions and any of the upper heights according to operational conditions at higher altitudes.

10. An assembly (20) comprising:
• at least a portion of a duct (2) for the channeling of fluids, preferably gases, and
• a system (10) according to any of claims 1 to 9.

11. A method for detecting leakage (2.1) in a portion of a duct (2), the method comprising the steps of:
a) providing a system (10) according to any of claims 1 to 9 and at least a portion of a duct (2), or an assembly (20) according to claim 10,
b) covering at least a portion of the duct (2) with a blanket (1) leaving an interstice (3) between them, and airtightly attaching the periphery (1.5) of the blanket (1) to at least a portion of a duct (2),
c) installing at least one sensing means (4) with a movable (4.1) part in fluid communication with such interstice (3) establishing a default electrical continuity of an electrical circuit (5), such that, upon a leakage (2.1) on the portion of the duct (2) takes place, the pressure in the interstice (3) increases, and the movable part (4.1) of the sensing means (4) is configured to be displaced away from the blanket (1), and
d) detecting such leakage (2.1) by a modification of the electrical continuity of the electrical circuit (5).

12. The method according to claim 11, wherein the method further comprises in step c): the movable part (4.1) of the sensing means (4) being configured to be displaced away from the blanket (1) once the pressure in the interstice (3) exceeds a pre-established pressure limit.

13. The method according to any of claims 11 or 12, wherein the sensing means (4) installed in step c) further comprises a rigid part (4.2) in turn comprising an even number of electrically insulated sections (4.4), wherein each section (4.4) is connected to an end of a wiring connection (5.3) of the electrical circuit (5), and each pair of electrical insulated sections (4.4) are at different heights from the outer face (1.4) of the blanket (1),
in such a way that each pair of electrical insulated sections (4.4) at different heights from the outer face (1.4) of the blanket (1) corresponds to different operational conditions of an aircraft (6), being the lowest height according to on-ground operational conditions and any of the upper heights according to operational conditions at higher altitudes.

14. The method according to claim 13, wherein the upper heights among the different heights of each pair of electrical insulated sections (4.4) are configured so that the higher the altitude in the operational condition of the aircraft (6), the higher the height of the pair of electrical insulated sections (4.4) from the outer face (1.4) of the blanket (1).

15. Aircraft (6) comprising the system (10) for leakage detection according to any of claims 1 to 10.
